# EUROPEAN PATENT SPECIFICATION

(11) **EP 3 059 471 B1**
(45) Date of publication and mention of the grant of the patent: **04.04.2018**
(21) Application number: 14865821.4
(22) Date of filing: 27.11.2014
(51) Int. Cl.: F16H 25/24, F16H 25/22, F16H 57/04

(54) **BALL SCREW AND SEAL USED THEREIN**
KUGELGEWINDETRIEB UND DARIN VERWENDETE DICHTUNG
VIS À BILLES ET JOINT D'ÉTANCHÉITÉ UTILISÉ DANS LADITE VIS

(30) Priority: 28.11.2013 JP 2013246341
(43) Date of publication of application: 24.08.2016
(60) Divisional application: 18157962.4
(73) Proprietor: NSK Ltd., Tokyo 141-8560 (JP)
(72) Inventor: MIYAZAKI, Kazunari, Fujisawa-shi, Kanagawa 252-0811 (JP); MARUYAMA, Daisuke, Fujisawa-shi, Kanagawa 252-0811 (JP)
(74) Representative: Klingseisen, Franz
(86) International application number: PCT/JP2014/005938
(87) International publication number: WO 2015/079696

(56) References cited:
- DE-A1-102006 014 359
- JP-A- H10 205 605
- JP-A- H10 299 854
- JP-A- 2000 145 916
- JP-A- 2007 232 051
- JP-A- 2007 255 661
- JP-A- 2007 309 428
- JP-A- 2013 019 519
- JP-A- 2013 249 887
- JP-A- 2014 031 845
- US-A1- 2007 227 278

## Description

### Technical Field

The present invention relates to seals with slits and ball screws including the same.

### Background Art

An example of ball screws including a seal with slits is a ball screw disclosed in PTL 1. The seal provided in the ball screw is a contact seal having a cylindrical shape and has a seal mountain that is engaged with a helical groove of a screw shaft on an inner periphery thereof. The seal is mounted in a nut in such a manner that a part of the seal protrudes outward from an end face of the nut. Additionally, the protruding part is split by a plurality of slits. The length of the slits is made to be 0.7 times or more than a lead of the screw shaft.

Herein, the ball screw disclosed in PTL 1 satisfies a relationship of 0 < θ1 ≤ θ, where an angle between the slits extending in an axial direction and a screw shaft line is 01 and a lead angle of the screw shaft is θ. Additionally, the slits are inclined by θ2 with respect to a vertical direction on a circumferential surface of the shaft. Foreign matter entering from a direction outside the nut hits against an inner peripheral surface of the seal contacted with the shaft, climbs up in a direction of the angle θ2, and is scraped out onto an outer peripheral surface of a seal trunk. After that, the foreign matter accumulated to some extent naturally falls by its own weight from the outer peripheral surface of the seal trunk.

### Citation List

### Patent Literature

PTL 1: Japanese Patent No. 3692677

### Summary of Invention

### Technical Problem

However, in the ball screw of PTL 1, a gap between the inner peripheral surface of the seal and the surface of the screw shaft is uniform and very small. Due to this, although grease on the surface of the screw shaft is plated with a constant small thickness, the grease can be simultaneously swept by an end of the seal. Thereby, extra grease gathers at the end of the seal or the extra grease can be also accumulated on the screw shaft and scattered by centrifugal force of the screw shaft. Thus, there has been room for improvement.

A further known ball screw device with a seal is, for example, disclosed in JP 2013 019519 A. In this document, a ball screw device is described and shown in the drawings, which has a screw shaft with a nut and a plurality of balls in respective rolling paths. A grease reservoir is furthermore provided, and the entry of very fine foreign matters is prevented by means of the specific form of the lip part of the seal member. The present invention has been accomplished by focusing on the above problem. It is an object of the invention to provide a ball screw that more efficiently prevents accumulation and scattering of extra grease in a nut and a seal used therein. This problem is solved by means of a ball screw with the features of claim 1, as well as by means of a seal having the features of claim 4. Preferred forms of realization are defined in the dependent claims.

### Solution to Problem

In order to solve the above problem, the present inventors repeated intensive and extensive studies and consequently found out that it is enough for a seal to have a function of taking out extra grease at a position where the centrifugal force of a screw shaft hardly acts on.

The present invention is based on the knowledge obtained by the present inventors, and an aspect of a ball screw for solving the above problem includes a screw shaft, a nut, and a plurality of balls, in which the screw shaft passes through the nut, a rolling path along which the balls roll is formed by a helical groove formed on an outer peripheral surface of the screw shaft and a helical groove formed on an inner peripheral surface of the nut, the balls are disposed in the rolling path, and a seal is attached to at least one end of ends of the nut in a moving direction of the nut.

The seal surrounds an outer periphery of the screw shaft and includes: a seal mountain inside the seal entering the helical groove of the screw shaft; a tubular portion exposed axially outside the nut; a grease reservoir portion provided on an inner peripheral surface of the tubular portion so as to form a space with respect to the screw shaft; a discharge outlet communicating with the grease reservoir portion and open to an outer peripheral surface of the tubular portion; and a slit communicating with the discharge outlet, extending axially in the tubular portion of the seal, and inclined with respect to a line in a diameter direction of the screw shaft in a counterclockwise direction as viewed from an outer end face of the tubular portion when the screw shaft has right-hand threads and in a clockwise direction as viewed from the outer end face of the tubular portion when the screw shaft has left-hand threads is attached to at least one end of ends of the nut in a moving direction of the nut.

In addition, in the above ball screw, the slit of the seal may be inclined with respect to an axial line of the screw shaft in a direction along the helical groove formed on the outer peripheral surface of the screw shaft, which helical groove defines a lead angle of the threads of the screw shaft.

In addition, in the above ball screw, a gap may be provided between the outer peripheral surface of the screw shaft and an inner peripheral surface of the seal, and a gap size between the helical groove of the screw shaft and the inner peripheral surface of the seal may be larger than a gap size between a land portion of the screw shaft and the inner peripheral surface of the seal.

The respective gap sizes are sizes in the radial direction of the screw shaft. It is to be noted that the gap size between the land portion of the screw shaft and the inner peripheral surface of the seal may be preferably 0.3 mm or less.

An aspect of a seal for solving the above problem is provided at at least one end of ends of nut of a ball screw in a moving direction of the nut, the ball screw including a screw shaft, the nut through which the screw shaft passes, and balls rolling along a rolling path formed by a helical groove formed on an outer peripheral surface of the screw shaft and a helical groove formed on an inner peripheral surface of the nut, in which the nut and the screw shaft relatively move via the balls. The seal surrounds an outer periphery of the screw shaft and includes: a seal mountain inside the seal entering the helical groove of the screw shaft; a tubular portion exposed axially outside the nut; a grease reservoir portion provided on an inner peripheral surface of the tubular portion so as to form a space with respect to the screw shaft; a discharge outlet communicating with the grease reservoir portion and open to an outer peripheral surface of the tubular portion; and a slit communicating with the discharge outlet, extending axially in the tubular portion, and inclined with respect to a line in a diameter direction of the screw shaft in a counterclockwise direction as viewed from an outer end face of the tubular portion when the screw shaft has right-hand threads and in a clockwise direction as viewed from the outer end face of the tubular portion when the screw shaft has left-hand threads.

In addition, in the above seal, the slit may be inclined with respect to an axial line of the screw shaft in a direction along the helical groove formed on the outer peripheral surface of the screw shaft, which helical groove defines a lead angle of the screw shaft.

In addition, in the above seal, an inner peripheral surface of the seal may be formed so that when the seal is mounted in the nut, a gap is provided between the outer peripheral surface of the screw shaft and the inner peripheral surface of the seal and a gap size between the helical groove of the screw shaft and the inner peripheral surface of the seal is larger than a gap size between a land portion of the screw shaft and the inner peripheral surface of the seal.

The respective gap sizes are sizes in the radial direction of the screw shaft. It is to be noted that the gap size between the land portion of the screw shaft and the inner peripheral surface of the seal may be preferably 0.3 mm or less.

### Advantageous Effects of Invention

According to the an aspect of the present invention, there can be provided a ball screw that more efficiently prevents accumulation and scattering of extra grease in a nut and a seal used in the same.

### Brief Description of Drawings

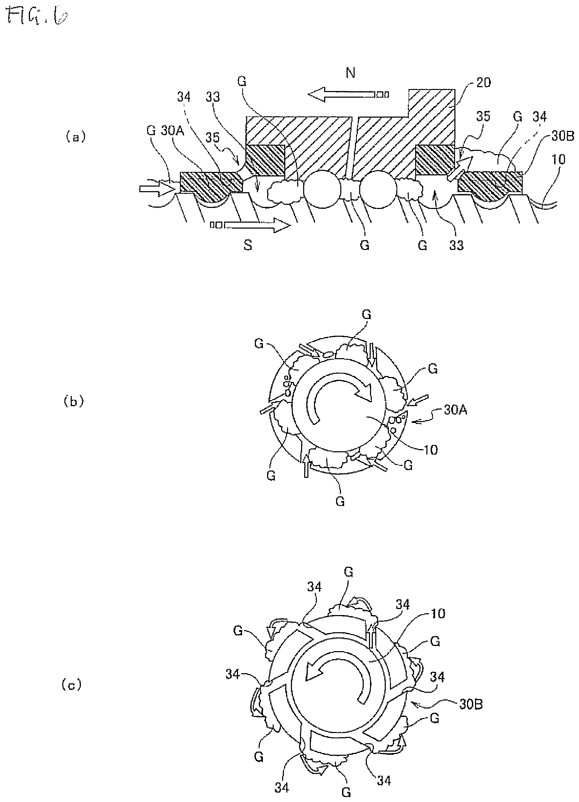

FIG. 1 is a partially sectioned side view depicting a structure in an aspect of a ball screw;
FIGs. 2A and 2B are diagrams depicting a structure of a seal in an aspect of the ball screw, in which FIG. 2A is an axial sectional view and FIG. 2B is a partial sectional view depicting a positional relationship with a screw shaft;
FIG. 3 is a front view depicting a structure in an aspect of the ball screw;
FIG. 4 is a partially enlarged view of FIG. 3;
FIG. 5 is a diagram of a slit as viewed from an arrow A in FIG. 4;
FIGs . 6A to 6C are diagrams depicting a mechanism in which scattering of grease is prevented by the ball screw and the seal used therein, in which FIG. 6A is an axial sectional view, FIG. 6B is a front view depicting an effect of the seal positioned on a front side in a moving direction of a nut, and FIG. 6C is a back view depicting an effect of the seal positioned on a rear side in the moving direction of the nut; and

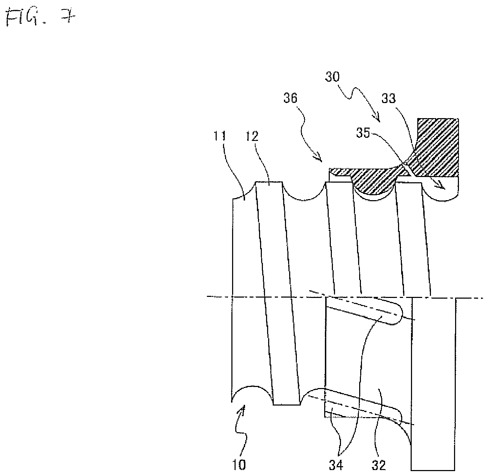

FIG. 7 is an axial sectional view of a mode in which chamfering is performed on an inner peripheral surface of an end of the seal in a structure of another embodiment of the ball screw.

### Description of Embodiments

In the following detailed description, many specific details will be described to provide thorough understanding of embodiments of the present invention. However, it will be apparent that even without such specific details, one or more embodiments can be implemented. In addition, for simplifying the drawings, well-known structures and devices are depicted in schematic views.

Hereinafter, a description will be given of an embodiment of a ball screw with reference to the drawings.

### (Structure)

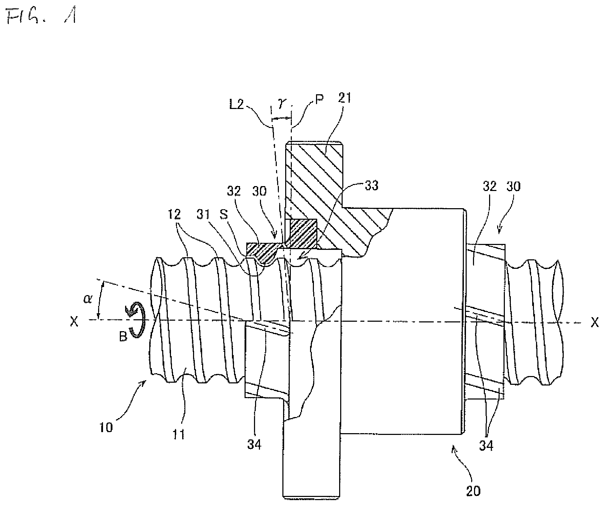

As depicted in FIG. 1, a ball screw 1 of the present embodiment includes a screw shaft 10, a nut 20, and a plurality of balls (unillustrated).

The nut 20 has a tubular shape (e.g., a cylindrical shape) with a through-hole formed therein and is installed so that the screw shaft 10 passes through the through-hole.

On an outer peripheral surface of the screw shaft 10 is formed a helical groove 11, and also, on an inner peripheral surface of the nut 20 is formed a helical groove (unillustrated) with the same lead as that of the helical groove 11. A rolling path along which the plurality of balls (unillustrated) roll is formed by the helical groove 11 and the helical groove (unillustrated) of the nut 20.

Then, in the ball screw 1 thus structured, the nut 20 and the screw shaft 10 are relatively movable via the balls disposed and rolling in the rolling path.

The screw shaft 10 is rotatably axially supported to a machine base (unillustrated) in which the ball screw 1 is installed, and connected to a rotary drive source (unillustrated) such as a motor. In addition, a flange 21 is formed at one end of the nut 20, and a mobile body (unillustrated) such as a mobile table that is driven forward and backward by the ball screw 1 is mounted via the flange 22. Thus, rotation of the screw shaft 10 drives the above mobile body forward and backward via the nut 20.

### <Seal>

Furthermore, in the ball screw 1 of the present embodiment, a seal 30 is attached to at least one end of ends of the nut 20 in a moving direction of at least the nut 20. Herein, as described above, in the ball screw 1 in which the nut 20 moves forward and backward with respect to the screw shaft 10, the seal 30 is preferably attached to each of both ends of the nut 20 in an axial direction (the moving direction) thereof.

The seal 30 surrounds the outer peripheral surface of the screw shaft 10 and includes thereinside a seal mountain 31 entering the helical groove 11 of the screw shaft 10 and a tubular portion 32 exposed axially outside the nut 20.

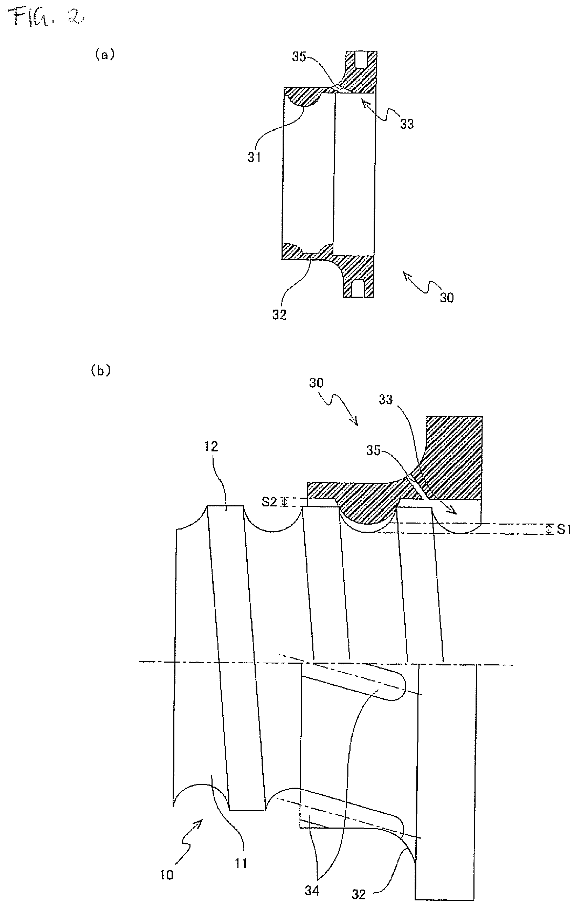

Additionally, in the seal 30 is provided a grease reservoir portion 33 on an inner peripheral surface of the tubular portion 32 so as to form a space with respect to the screw shaft 10, as depicted in FIG. 2A. The grease reservoir portion 33 is formed so that the inner peripheral surface thereof is enlarged in diameter from one end of the seal 30 exposed from the end of the nut 20 to the other end of the seal 30 buried in the nut 20. In other words, the inner diameter of the one end of the seal 30 is a diameter enough to contact with the land portion 12 of the screw shaft 10, and the inner diameter of the other end of the seal 30 is enlarged greater than the inner diameter of the one end of the seal 30.

Additionally, in the seal 30 is provided a discharge outlet 35 communicating with the grease reservoir portion 33 and open to an outer peripheral surface of the tubular portion 32 (see FIGs. 6A to 6C).

The discharge outlet 35 is provided extending axially from an axially outer end of the tubular portion 32. In addition, an opening portion of the discharge outlet 35 on the outer peripheral surface of the tubular portion 32 has preferably a circular shape so that grease is easily pushed out from the grease reservoir portion 33.

### [Gap]

A gap S is provided between the outer peripheral surface of the screw shaft 10 and the inner peripheral surface of the seal 30. Then, a gap size S1 between (a bottom portion of) the helical groove 11 of the screw shaft 10 and the inner peripheral surface of the seal 30 is preferably larger than a gap size S2 between the land portion 12 between the helical grooves 11 of the screw shaft 10 and the inner peripheral surface of the seal 30 (see FIG. 2B). The respective gap sizes S1 and S2 are sizes in the radial direction of the screw shaft 10. Additionally, the gap size S2 is preferably 0.3 mm or less.

Herein, sectional shapes of conventional seals have been formed into a uniform Gothic arch shape so that the gap sizes S1 and S2 become substantially the same in accordance with a sectional shape of the helical groove 11 that is a Gothic arch shape. On the other hand, the sectional shape of the seal of the present embodiment is formed into, for example, a simple R-shape, so that the gap size S1 is made larger than the gap size S2.

By defining the gap sizes S1 and S2 this way, the sectional shape of the seal 30 becomes a shape that makes it easier for grease adhering to the surface of the screw shaft 10 to enter the nut 20.

### [Slit]

Furthermore, in the tubular portion 32 of the seal 30 is formed a slit 34 extending axially from the axially outer end thereof. The slit 34 is provided so as to be inclined with respect to a line in a diameter direction of the screw shaft 10 in a counterclockwise direction as viewed from an outer end face of the tubular portion 32 when the screw shaft 10 has right-hand threads. On the other hand, when the screw shaft 10 has left-hand threads, the slit 34 is formed to be inclined in a clockwise direction as viewed from the outer end face of the tubular portion 32.

Herein, the slit 34 is provided in the same phase as an installation position of the discharge outlet 35 in a circumferential direction of the seal 30 and communicates with the discharge outlet 35.

The slit 34 is provided in six positions at equal intervals in a circumferential direction of the tubular portion 32. However, the number of the slits 34 can be any other number in consideration of the number of discharge outlets 35 and respective functions that will be described later. In addition, preferably, all of the slits 34 communicate with the discharge outlets 35. However, there may be provided a slit 34 not communicating with the discharge outlet 35.

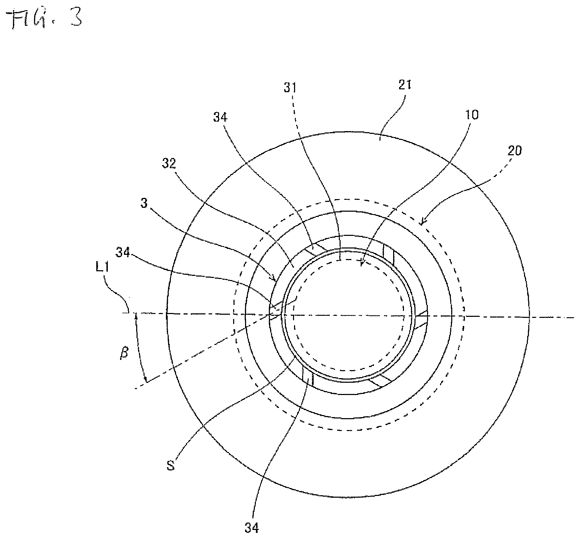

The slits 34 are inclined at an angle β with respect to a line L1 in the diameter direction of the screw shaft 10 in the counterclockwise direction as viewed from the outer end face of the tubular portion 32 to the axial direction of the screw shaft 10 when the screw shaft 10 has right-hand threads (see FIG. 3). Additionally, the screw shaft 10 depicted in FIG. 3 has right-hand threads, and FIG. 3 depicts a state in which the seal 30 on the left side of FIG. 1 is viewed from the left of FIG. 1. In addition, even when the seal 30 on the right side of FIG. 1 is viewed from the right of FIG. 1, it appears the same as the seal 30 of FIG. 3. Additionally, in the case of the screw shaft 10 having left-hand threads, the inclination angle β of the slits 34 will be made to be inclined clockwise with respect to the line L1, which is opposite to the direction of the right-hand threads.

In addition, the slits 34 of the seal 30 are inclined at an angle of α with respect to an axial line X of the screw shaft 10. The direction of the angle α is inclined in a direction along the helical groove formed on the outer peripheral surface of the screw shaft 10 from the axial line X (see FIG. 1). In addition, an angle between a tangent line L2 and a plane P perpendicular to the axial line X is a lead angle γ of the threads. Accordingly, when defined from a relationship with the lead angle γ, the tangent line L2 can be regarded as the helical groove formed on the outer peripheral surface of the screw shaft 10, which defines the lead angle γ of the threads of the screw shaft 10. Then, the slits 34 can be described as being inclined with respect to the axial line X of the screw shaft 10 in the direction along the helical groove formed on the outer peripheral surface of the screw shaft 10, which defines the lead angle γ of the threads of the screw shaft 10.

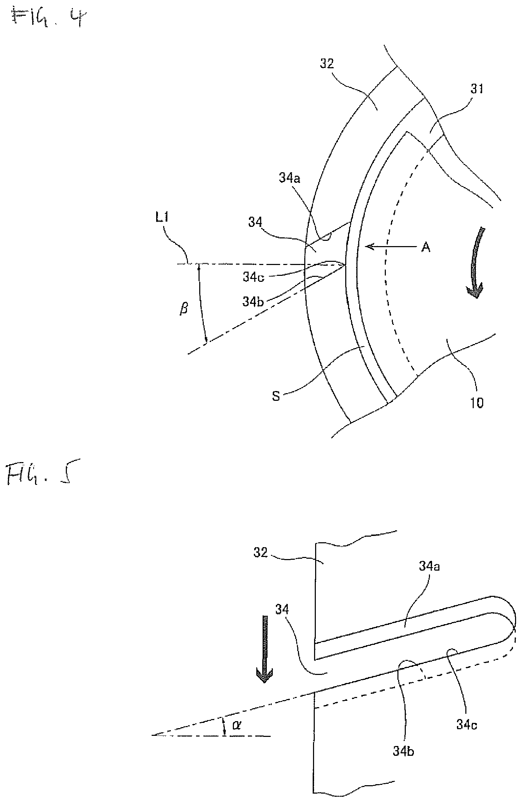

Additionally, since all of the slits 34 are formed with the same width size in the respective directions inclined at the angles α and β, opposing two inner surfaces 34a and 34b (see FIGs. 4 and 5) of the slits 34 are mutually parallel surfaces, and the respective surfaces 34a and 34b are also inclined at the angles α and β. Thus, of the opposing two surfaces (34a, 34b), the surface 34b located on a rotating direction side of the screw shaft 10 forms a sharp angle with the inner peripheral surface of the tubular portion 32 of the seal 30, thereby forming an edge portion 34c thereat. Additionally, arrows in FIGs. 4 and 5 depict the rotation direction of the screw shaft 10.

### (Behavior)

Next, a behavior of the ball screw of the present embodiment will be described with reference to FIGs. 6A to 6C.

FIGs. 6A to 6C are diagrams depicting a mechanism in which scattering of grease is prevented by the ball screw of the present embodiment and the seal used therein. FIG. 6A is an axial sectional view; FIG. 6B is a front view depicting an effect of the seal positioned on a front side in the moving direction of the nut; and FIG. 6C is a back view depicting an effect of the seal positioned on a rear side of the moving direction of the nut. Additionally, in FIGs. 6A to 6C, the description will be given by designating the seal positioned on the front side of the moving direction of the nut 20 as seal 30A and the seal positioned on the rear side of the moving direction of the nut 20 as seal 30B. In addition, an arrow "N" of FIG. 6A indicates the moving direction of the nut 20, and an arrow "S" thereof indicates a moving direction of the screw shaft 10.

First, when operating the ball screw 1, the ball screw 1 is operated in a state where grease is filled in a space between the nut 20 and the screw shaft 10. Herein, for example, when the screw shaft 10 is rotated leftward in a rotation direction B as viewed in the right direction from the left in FIG. 1, the nut 20 moves in the right direction in FIG. 1. The movement of the nut 20 is performed while leaving grease in the nut 20 behind on the surface of the screw shaft 10 at a predetermined film thickness from the gap S between the inner peripheral surface of the tubular portion 32 of the seal 30 and the screw shaft 10.

At this time, a grease G adhering to the surface of the screw shaft 10 and being about to come out of the nut 20 is scraped off at the tubular portion 32 of the seal 30B and, due to the counteraction of the tubular portion 32, discharged to an outer periphery of the tubular portion 32 through the grease reservoir portion 33, the discharge outlets 35, and the slits 34 of the seal 30B. Thus, the grease left behind on the surface of the screw shaft 10 does not exceed the above film thickness.

Then, the grease G is guided through the following steps (1) to (5) and finally accumulated on the outer peripheral surface of the seal 30B, whereby the influence of rotation of the screw shaft 10 is eliminated, so that grease scattering can be prevented.
(1) First, as depicted in FIG. 6B, grease on the screw shaft 10 is caught in the nut 20 via a gap between the seal 30A and the screw shaft 10.
(2) Next, as depicted in FIG. 6A, the grease enters the nut 20 through a gap between the helical groove 11 and the seal 30A.
(3) Next, as depicted in FIG. 6A, the grease entering the nut 20 is forced to surge to the land portions 12 by balls .
(4) Then, as depicted in FIG. 6A, the grease surging to the land portions 12 is accumulated in the grease reservoir portion 33 formed by the screw shaft 10 and the seal 30B.
(5) Then, as depicted in FIGs. 6A and 6C, the grease accumulated in the grease reservoir portion 33 is discharged from the nut 20 through the discharge outlets 35 of the seal 30B, guided along the slits 34, and accumulated on the outer peripheral surface of the seal 30B.

At this time, the outer peripheral surface of the seal 30B on which extra grease G in the nut 20 is discharged is a place in which centrifugal force does not act on the grease G. Accordingly, the grease G is not scattered around by centrifugal force and falls in drops by its own weight to a part below the screw shaft 10 not associated with the scattering. Thus, no harmful effect due to the scattering of the grease G occurs.

In this way, the extra grease G that falls through the slits 34 of the seal 30 falls from the seal 30B located behind the nut 20 upon movement thereof. Accordingly, in FIGs. 1 to 7, when the screw shaft 10 is rotated leftward as viewing the right from the left in FIG. 1, the nut 20 moves in the right direction in FIG. 1 and the grease G falls from the seal 30 located behind the nut 20 at that time, which is on the left side in FIG. 1. Accordingly, when the screw shaft 10 is rotated in an opposite direction, the nut 20 moves in the left direction in FIG. 1, and similarly, the grease falls from the seal 30 located behind the nut 20 at that time, which is on the right side in FIG. 1.

As described hereinabove, in the ball screw of the present embodiment, the grease G in the nut 20 is discharged onto the outer periphery of the tubular portion 32 through the grease reservoir portion 33, the discharge outlets 35, and the slits 34 of the seal 30B provided at the rear end of the nut 20 in the moving direction thereof. Thus, since the extra grease in the nut 20 is taken outside at the position where the centrifugal force of the screw shaft 10 hardly acts on, the grease does not scatter around.

Particularly, since the slits 34 communicate with the grease reservoir portion 33, the seal 30 installed on the front side in the moving direction of the nut can effectively return extra grease adhering to the surface of the screw shaft 10 into the nut 20. Then, the extra grease is guided onto the outer surface of the seal 30 via the slits 34, thereby avoiding the extra grease not contributing to lubrication in the nut 20 from adhering to the screw shaft 10, so that scattering of the grease can be effectively prevented.

Herein, as an another embodiment, as depicted in FIG. 7, preferably, chamfering is performed on an inner diameter of an end face 36 of the seal 30 so as to have a shape that makes it easier to guide grease into the nut 20. The shape, angle, and the like of chamfering on the end face 36c are not particularly limited as long as chamfering is performed on the inner diameter side thereof.

The ball screw of the present invention is suitable to ball screws and sliding screws such as triangular screws and trapezoidal screws used in, for example, semiconductor element manufacturing apparatuses, liquid crystal display panel manufacturing apparatuses and conveyor apparatuses, and other apparatuses used in clean environments.

While the present invention has been described with reference to the specific embodiments hereinabove, the invention is intended not to be limited thereto. By referring to the description of the present invention, various modifications of the disclosed embodiments and other embodiments of the invention are apparent to those skilled in the art. Accordingly, it should be understood that the appended claims encompass these modifications or embodiments included in the scope of the claims. In addition, although the above embodiments have been described by exemplifying the case of the screw shaft 10 having the right-hand threads, the screw shaft 10 obviously may be one having left-hand threads. In this case, the angle β of the slits 34 depicted in FIG. 3 is opposite to that in FIG. 3, as described above, and the tangent line L2 and the angle α in FIG. 1 also appear line-symmetrically on an underside of the axial line X-X in FIG. 1.

### Reference Signs List

- 1:: Ball screw
- 10:: Screw shaft
- 11:: Helical groove
- 20:: Nut
- 30:: Seal
- 31:: Seal mountain
- 32:: Tubular portion
- 33:: Grease reservoir portion
- 34:: Slit
- 35:: Discharge outlet
- S:: Gap

## Claims

1. A ball screw (1) comprising a screw shaft (10), a nut (20), and a plurality of balls, wherein,
the screw shaft (10) passes through the nut (20),
a rolling path along which the balls roll is formed by a helical groove (11) formed on an outer peripheral surface of the screw shaft (10) and a helical groove formed on an inner peripheral surface of the nut (20),
the balls are disposed in the rolling path, and
a seal (30) is attached to at least one end of ends of the nut (20) in a moving direction of the nut (20),
the seal (30) surrounds an outer periphery of the screw shaft (10) and comprises:
a seal mountain (31) inside the seal (30) entering the helical groove (11) of the screw shaft (10);
a tubular portion (32) exposed axially outside the nut (20) ;
a grease reservoir portion (33) provided on an inner peripheral surface of the tubular portion (32) so as to form a space with respect to the screw shaft (10); and
a discharge outlet (35) communicating with the grease reservoir portion (33) and open to an outer peripheral surface of the tubular portion (32);
**characterized by**
a slit (34) communicating with the discharge outlet (35), being formed in the tubular portion (32) of the seal (30), extending in an axis direction of the tubular portion (32) and inclined with respect to a line in a diameter direction of the screw shaft (10) in a counterclockwise direction as viewed from an outer end face of the tubular portion (32) when the screw shaft (10) has right-hand threads and in a clockwise direction as viewed from the outer end face of the tubular portion (32) when the screw shaft (10) has left-hand threads.

2. The ball screw (1) according to claim 1, wherein the slit (34) of the seal (30) is inclined with respect to an axial line of the screw shaft (10) in a direction along the helical groove (11) formed on the outer peripheral surface of the screw shaft (10), which helical groove (11) defines a lead angle of the threads of the screw shaft (10).

3. The ball screw (1) according to claim 1 or 2, wherein a gap (S) is provided between the outer peripheral surface of the screw shaft (10) and an inner peripheral surface of the seal (30), and a gap size between the helical groove (11) of the screw shaft (10) and the inner peripheral surface of the seal (30) is larger than a gap size between a land portion of the screw shaft (10) and the inner peripheral surface of the seal (30).

4. A seal (30) configured to be provided at at least one end of ends of the nut (20) of a ball screw (1) in a moving direction of the nut (20), the ball screw (1) including a screw shaft (10), the nut (20) through which the screw shaft (10) passes, and balls rolling along a rolling path formed by a helical groove (11) formed on an outer peripheral surface of the screw shaft (10) and a helical groove formed on an inner peripheral surface of the nut (20), in which the nut (20) and the screw shaft (10) relatively move via the balls, the seal (30) surrounding an outer periphery of the screw shaft (10) and comprising:
a seal mountain (31) inside the seal (30) entering the helical groove (11) of the screw shaft (10);
a tubular portion (32) exposed axially outside the nut (10);
a grease reservoir portion (33) provided on an inner peripheral surface of the tubular portion (32) so as to form a space with respect to the screw shaft (10); and
a discharge outlet (35) communicating with the grease reservoir portion (33) and open to an outer peripheral surface of the tubular portion (32);
**characterized by**
a slit (34) communicating with the discharge outlet (35), being formed in the tubular portion (32), extending in an axis direction of the tubular portion (32) and inclined with respect to a line in a diameter direction of the screw shaft (10) in a counterclockwise direction as viewed from an outer end face of the tubular portion (32) when the screw shaft (10) has right-hand threads and in a clockwise direction as viewed from the outer end face of the tubular portion (32) when the screw shaft (10) has left-hand threads.

5. The seal (30) according to claim 4, wherein the slit (34) is inclined with respect to an axial line of the screw shaft (10) in a direction along the helical groove (11) formed on the outer peripheral surface of the screw shaft (10), which helical groove (11) defines a lead angle of the screw shaft (10).

6. The seal (30) according to claim 4 or 5, wherein, during use of said seal, an inner peripheral surface of the seal (30) is formed so that when the seal (30) is mounted in the nut (20), a gap (S) is provided between the outer peripheral surface of the screw shaft (10) and the inner peripheral surface of the seal (30) and a gap size between the helical groove (11) of the screw shaft (10) and the inner peripheral surface of the seal (30) is larger than a gap size between a land portion of the screw shaft (10) and the inner peripheral surface of the seal (30) .

## Patentansprüche

1. Kugelumlaufspindel (1) mit einer Schraubenwelle (10), einer Mutter (20) und einer Vielzahl von Kugeln, wobei
die Schraubenwelle (10) durch die Mutter (20) verläuft,
ein Rollweg, auf dem die Kugeln rollen, durch eine schraubenförmige Nut (11), die an einer äußeren Umfangsfläche der Schraubenwelle (10) ausgebildet ist, und eine schraubenförmige Nut gebildet ist, die an einer inneren Umfangsfläche der Mutter (20) ausgebildet ist;
die Kugeln in der Rollbahn angeordnet sind, und
eine Dichtung (30) an mindestens einem Ende der Enden der Mutter (20) in einer Bewegungsrichtung der Mutter (20) befestigt ist,
die Dichtung (30) einen äußeren Umfang der Schraubenwelle (10) umgibt und umfasst:
einen Dichtungsberg (31) innerhalb der Dichtung (30), der in die schraubenförmige Nut (11) der Schraubenwelle (10) eintritt;
ein rohrförmiger Abschnitt (32), der axial außerhalb der Mutter (20) freiliegt;
ein Fettreservoirabschnitt (33), der an einer inneren Umfangsfläche des rohrförmigen Abschnitts (32) vorgesehen ist, um einen Raum in Bezug auf die Schraubenwelle (10) zu bilden; und
einen Abgabeauslass (35), der mit dem Fettreservoirabschnitt (33) in Verbindung steht und zu einer äußeren Umfangsfläche des rohrförmigen Abschnitts (32) offen ist;
**gekennzeichnet durch**
einen Schlitz (34), der mit dem Abgabeauslass (35) in Verbindung steht, der in dem rohrförmigen Abschnitt (32) der Dichtung (30) ausgebildet ist und sich in einer Achsenrichtung des rohrförmigen Abschnitts (32) erstreckt und gegenüber einer Linie in einer Durchmesserrichtung der Schraubenwelle (10) im Gegenuhrzeigersinn gesehen von einer äußeren Endfläche des rohrförmigen Abschnitts (32) geneigt ist, wenn die Schraubenwelle (10) Rechtsgewinde aufweist, und im Uhrzeigersinn gesehen von der Außenseite der Endfläche des rohrförmigen Abschnitts (32), wenn die Schraubenwelle (10) Linksgewinde aufweist.

2. Kugelumlaufspindel (1) nach Anspruch 1, wobei der Schlitz (34) der Dichtung (30) in Bezug auf eine axiale Linie der Schraubenwelle (10) in einer Richtung entlang der schraubenförmigen Nut (11) geneigt ist, die an der Außenumfangsfläche der Schraubenwelle (10) ausgebildet ist, wobei die Schraubennut (11) einen Steigungswinkel der Gewinde der Schraubenwelle (10) definiert.

3. Kugelumlaufspindel (1) nach Anspruch 1 oder 2, wobei ein Spalt (S) zwischen der äußeren Umfangsfläche der Schraubenwelle (10) und einer inneren Umfangsfläche der Dichtung (30) vorgesehen ist und eine Spaltgröße zwischen der schraubenförmigen Nut (11) der Schraubenwelle (10) und der inneren Umfangsfläche der Dichtung (30) größer ist als eine Spaltgröße zwischen einem Stegabschnitt der Schraubenwelle (10) und der inneren Umfangsfläche der Wellendichtung (30).

4. Dichtung (30), die eingerichtet ist, an mindestens einem Ende der Enden der Mutter (20) einer Kugelumlaufspindel (1) in einer Bewegungsrichtung der Mutter (20) vorgesehen zu sein, wobei die Kugelumlaufspindel (1) einen Schraubenschaft (10), die Mutter (20), durch die die Schraubenwelle (10) läuft, und Kugeln, die entlang einer Rollbahn rollen, die durch eine schraubenförmige Nut (11), die an einer äußeren Umfangsfläche der Schraubenwelle (10) ausgebildet ist und eine schraubenförmige Nut gebildet ist, die an einer inneren Umfangsfläche der Mutter (20) ausgebildet ist, in der sich die Mutter (20) und die Schraubenwelle (10) relativ zueinander über die Kugeln bewegen, wobei die Dichtung (30) einen äußeren Umfang der Schraubenwelle (10) umgibt und umfasst:
einen Dichtungsberg (31) innerhalb der Dichtung (30), der in die schraubenförmige Nut (11) der Schraubenwelle (10) eintritt;
einen rohrförmigen Abschnitt (32), der axial außerhalb der Mutter (10) freiliegt;
einen Fettreservoirabschnitt (33), der an einer inneren Umfangsfläche des rohrförmigen Abschnitts (32) vorgesehen ist, um einen Raum in Bezug auf die Schraubenwelle (10) zu bilden; und
einen Abgabeauslass (35), der mit dem Fettreservoirabschnitt (33) in Verbindung steht und zu einer äußeren Umfangsfläche des röhrenförmigen Abschnitts (32) offen ist;
**gekennzeichnet durch**
einen Schlitz (34), der mit dem Abgabeauslass (35) in Verbindung steht und in dem rohrförmigen Abschnitt (32) ausgebildet ist und sich in einer Achsenrichtung des rohrförmigen Abschnitts (32) erstreckt und in Bezug auf eine Linie in einer Durchmesserrichtung der Schraubenwelle (10) im Gegenuhrzeigersinn gesehen von einer äußeren Endfläche des rohrförmigen Abschnitts (32) geneigt ist, wenn die Schraubenwelle (10) Rechtsgewinde aufweist, und im Uhrzeigersinn gesehen von der äußeren Endfläche des rohrförmigen Abschnitts (32) wenn die Schraubenwelle (10) Linksgewinde aufweist.

5. Dichtung (30) nach Anspruch 4, wobei der Schlitz (34) in Bezug auf eine axiale Linie der Schraubenwelle (10) in einer Richtung entlang der schraubenförmigen Nut (11) geneigt ist, die an der äußeren Umfangsfläche von der Schraubenwelle (10) ausgebildet ist, wobei die Schraubennut (11) einen Steigungswinkel der Schraubenwelle (10) definiert.

6. Dichtung (30) nach Anspruch 4 oder 5, wobei während der Verwendung der Dichtung eine innere Umfangsfläche der Dichtung (30) so ausgebildet ist, dass, wenn die Dichtung (30) in der Mutter (20) angebracht ist, ein Spalt (S) zwischen der Außenumfangsfläche der Schraubenwelle (10) und der Innenumfangsfläche der Dichtung (30) vorgesehen ist und eine Spaltgröße zwischen der Schraubennut (11) der Schraubenwelle (10) und der Innenumfangsfläche der Dichtung (30) größer als eine Spaltgröße zwischen einem Stegabschnitt der Schraubenwelle (10) und der Innenumfangsfläche der Dichtung (30) ist.

## Revendications

1. Vis à billes (1) comprenant un arbre de vis (10), un écrou (20), et une pluralité de billes, dans laquelle,
l'arbre de vis (10) passe à travers l'écrou (20),
un trajet de roulement le long duquel les billes roulent est formé par une rainure hélicoïdale (11) formée sur une surface périphérique externe de l'arbre de vis (10) et une rainure hélicoïdale formée sur une surface périphérique interne de l'écrou (20), les billes sont disposées dans le trajet de roulement, et
un joint d'étanchéité (30) est fixé à au moins une extrémité des extrémités de l'écrou (20) dans une direction de déplacement de l'écrou (20),
le joint d'étanchéité (30) entoure une périphérie externe de l'arbre de vis (10) et comprend :
une crête d'étanchéité (31) à l'intérieur du joint d'étanchéité (30) entrant dans la rainure hélicoïdale (11) de l'arbre de vis (10) ;
une portion tubulaire (32) exposée axialement à l'extérieur de l'écrou (20) ;
une portion réservoir de graisse (33) fournie sur une surface périphérique interne de la portion tubulaire (32) de manière à former un espace par rapport à l'arbre de vis (10) ; et
une sortie d'évacuation (35) communiquant avec la portion réservoir de graisse (33) et donnant sur une surface périphérique externe de la portion tubulaire (32) ;
**caractérisée par**
une fente (34) communiquant avec la sortie d'évacuation (35), étant formée dans la portion tubulaire (32) du joint d'étanchéité (30), s'étendant dans une direction axiale de la portion tubulaire (32) et inclinée par rapport à une ligne dans une direction de diamètre de l'arbre de vis (10) dans le sens inverse des aiguilles d'une montre telle qu'est observée depuis une face d'extrémité externe de la portion tubulaire (32) lorsque l'arbre de vis (10) a des filetages à droite et dans le sens des aiguilles d'une montre telle qu'est observée depuis la face d'extrémité externe de la portion tubulaire (32) lorsque l'arbre de vis (10) a des filetages à gauche.

2. Vis à billes (1) selon la revendication 1, dans laquelle la fente (34) du joint d'étanchéité (30) est inclinée par rapport à une ligne axiale de l'arbre de vis (10) dans une direction suivant la rainure hélicoïdale (11) formée sur la surface périphérique externe de l'arbre de vis (10), laquelle rainure hélicoïdale (11) définit un angle d'attaque des filetages de l'arbre de vis (10).

3. Vis à billes (1) selon la revendication 1 ou 2, dans laquelle un espace (S) est fourni entre la surface périphérique externe de l'arbre de vis (10) et une surface périphérique interne du joint d'étanchéité (30), et une taille d'espace entre la rainure hélicoïdale (11) et l'arbre de vis (10) et la surface périphérique interne du joint d'étanchéité (30) est plus importante qu'une taille d'espace entre une portion d'appui de l'arbre de vis (10) et la surface périphérique interne du joint d'étanchéité (30).

4. Joint d'étanchéité (30) configuré pour être fourni au niveau d'au moins une extrémité des extrémités de l'écrou (20) d'une vis à billes (1) dans une direction de déplacement de l'écrou (20), la vis à billes (1) incluant un arbre de vis (10), l'écrou (20) à travers lequel l'arbre de vis (10) passe, et des billes roulant le long d'un trajet de roulement formé par une rainure hélicoïdale (11) formée sur une surface périphérique externe de l'arbre de vis (10) et une rainure hélicoïdale formée sur une surface périphérique interne de l'écrou (20), dans lequel l'écrou (20) et l'arbre de vis (10) se déplacent relativement par l'intermédiaire des billes, le joint d'étanchéité (30) entourant une périphérie externe de l'arbre de vis (10) et comprenant :
une crête d'étanchéité (31) à l'intérieur du joint d'étanchéité (30) entrant dans la rainure hélicoïdale (11) de l'arbre de vis (10) ;
une portion tubulaire (32) exposée axialement à l'extérieur de l'écrou (10) ;
une portion réservoir de graisse (33) fournie sur une surface périphérique interne de la portion tubulaire (32) de manière à former un espace par rapport à l'arbre de vis (10) ; et
une sortie d'évacuation (35) communiquant avec la portion réservoir de graisse (33) et donnant sur une surface périphérique externe de la portion tubulaire (32) ;
**caractérisé par**
une fente (34) communiquant avec la sortie d'évacuation (35), étant formée dans la portion tubulaire (32), s'étendant dans une direction axiale de la portion tubulaire (32) et inclinée par rapport à une ligne dans une direction de diamètre de l'arbre de vis (10) dans le sens inverse des aiguilles d'une montre telle qu'observée depuis une face d'extrémité externe de la portion tubulaire (32) lorsque l'arbre de vis (10) a des filetages à droite et dans le sens des aiguilles d'une montre telle qu'observée depuis la face d'extrémité externe de la portion tubulaire (32) lorsque l'arbre de vis (10) a des filetages à gauche.

5. Joint d'étanchéité (30) selon la revendication 4, dans lequel la fente (34) est inclinée par rapport à une ligne axiale de l'arbre de vis (10) dans une direction suivant la rainure hélicoïdale (11) formée sur la surface périphérique externe de l'arbre de vis (10), laquelle rainure hélicoïdale (11) définit un angle d'attaque de l'arbre de vis (10).

6. Joint d'étanchéité (30) selon la revendication 4 ou 5, dans lequel, pendant l'utilisation dudit joint d'étanchéité, une surface périphérique interne du joint d'étanchéité (30) est formée de sorte que lorsque le joint d'étanchéité (30) est monté dans l'écrou (20), un espace (S) soit fourni entre la surface périphérique externe de l'arbre de vis (10) et la surface périphérique interne du joint d'étanchéité (30) et une taille d'espace entre la rainure hélicoïdale (11) de l'arbre de vis (10) et la surface périphérique interne du joint d'étanchéité (30) est plus importante qu'une taille d'espace entre une portion d'appui de l'arbre de vis (10) et la surface périphérique interne du joint d'étanchéité (30).
